# EUROPEAN PATENT SPECIFICATION

(11) **EP 1 213 130 B1**
(45) Date of publication and mention of the grant of the patent: **29.06.2005**
(21) Application number: 01127466.9
(22) Date of filing: 28.11.2001
(51) Int. Cl.: B29C 70/88, B60C 1/00, B60C 11/14, B29D 30/52

(54) **Tyre containing precisely located and precisely oriented elements**
Reifen mit genau angeordneten und orientierten Elementen
Pneu avec des éléments positionnés et orientés de façon précise

(30) Priority: 07.12.2000 US 732494
(43) Date of publication of application: 12.06.2002
(73) Proprietor: THE GOODYEAR TIRE & RUBBER COMPANY, Akron, Ohio 44316-0001 (US)
(72) Inventor: Sentmanat, Martin Lamar, Akron, Ohio 44303 (US)
(74) Representative: Kutsch, Bernd

(56) References cited:
- EP-A- 0 287 495
- EP-A- 0 481 913
- WO-A-98/13185
- US-A- 3 682 221
- US-A- 3 837 986
- US-A- 4 088 523
- US-A- 4 290 470
- HELNWEIN P ET AL: "A NEW 3-D FINITE ELEMENT MODEL FOR CORD-REINFORCED RUBBER COMPOSITES - APPLICATION TO ANALYSIS OF AUTOMOBILE TIRES" FINITE ELEMENTS IN ANALYSIS AND DESIGN, ELSEVIER, AMSTERDAM, NL, vol. 14, 1993, pages 1-16, XP000603492 ISSN: 0168-874X

## Description

### Field of the Invention

The invention relates to tires having domains of injected ingredients.

### Background of the Invention

In general, the presence of short fibers in a cured rubber compound results in an increase in initial or low strain (low elongation) modulus (stiffness). Concomitantly, the presence of short fibers in rubber often times results in reduced fatigue endurance and in higher hysteretic heat build-up under periodic stresses.

Various discontinuous short fibers have been used to enhance stiffness (modulus) of rubber vulcanizates. For example, discontinuous cellulose fibers have been used as dispersions in rubber as disclosed in US-A- 3,697,364; 3,802,478 and 4,236,563. Other discontinuous fibers have been suggested or used such as, for example, aromatic polyamides (aramids), aliphatic polyamides (nylon), cotton, rayon, polyester, glass, carbon and steel.

Many of the polymeric fibers used in the tire art are known as fully or highly oriented short fibers. Elastomers reinforced with short fibers, for example Kevlar® pulp, demonstrate good stiffness. As the loading of Kevlar® pulp in an elastomer increases, the stiffness of the composite increases, but unfortunately, the crack growth resistance decreases.

WO-A- 90/04617 to Allied Signal Inc. teaches the preparation of partially oriented yarns (POY short fibers) and discloses that such short fibers can be used in tires.

The application of these fibers to tires is described in US-A- 5,576,104 by The Goodyear Tire & Rubber Company.

Although there has been interest in the use of short fibers for reinforcing plastic and polymeric products for many years, the potential for such reinforcement has not been fully developed due to limitations in extrusion and mixing. Under existing processing, fibers are typically introduced into the compound as an ingredient during the mixing stage. However, such mixes are limited to short length fibers, low fiber loading and low compound viscosity, because of the difficulties in processing due to the increase in compound viscosity caused by fiber incorporation. In addition, during compound mixing fibers tend to fracture and aggregate within the compound, producing pockets of poorly dispersed fibers within the compound matrix.

After mixing, fibers in a compound are generally randomly oriented. Attempts at achieving directionally oriented fibers in rubber components have been met with some, but not complete success. During extrusion and calendering, fibers in a compound tend to align in the direction of flow, although the random fiber orientation introduced during the mixing stage can never be entirely eliminated due to the viscoelastic nature of the elastomer matrix. Thus, fiber orientation during processing can not be fully controlled, even by using highly aligning flow fields. As a consequence, complete, i.e. 100% fiber orientation cannot be achieved in the lengthwise direction of extruded or calendered components. US-A- 3837986 discloses one such attempt at orienting fibers in elastomer.

Although some degree of lengthwise fiber orientation can be achieved via extrusion and calendering processes, and lengthwise orientation has advantages in some applications, it is hypothesized that fibers oriented perpendicular to the surface, or in the thickness direction of a rubber component, can improve the abrasion and lateral stiffness properties of a component. However, such fiber composites cannot be produced by conventional processing operations.

While very difficult to manufacture, attempts at achieving a perpendicular fiber orientation have been made by two methods. The first method is highly laborious and involves cutting small sections of calendered or extruded fiber-filled components, where some degree of lengthwise fiber orientation is obtained, then rotating the cut sections of the calendered sheet side by side to provide perpendicular fiber orientation. A second method involves extruding a short-fiber reinforced compound through an abrupt expansion die that causes the extrudate sheet to fold upon itself in an accordion-like manner, as disclosed in WO-A- 98/13185, so that a lamellar-type structure is obtained with substantially perpendicularly oriented fiber reinforcement.

EP-A- 0 287 495 discloses a method of injection molding tire components. US-A- 4,290,470 discloses a tire with a porous tread and a method of bonding elements to the tread.

It is an object of the invention to provide tires with precisely placed and angled ingredients.

It is a further object of the invention to provide tires having an elastomeric matrix having injected domains of precisely placed and oriented reinforcement.

A tire made using a reinforced matrix of the invention is also disclosed.

Other objects of the invention will be apparent from the following description and claims.

### Summary of the Invention

The invention relates to a tire product having domains of injected ingredients therein. The injected ingredients are distributed in the tire in a specific controlled pattern.

In one embodiment, the injected ingredients may be fibers disposed in a plurality of groups, wherein all the fibers in each group have a controlled angle of orientation in the product. The fibers may be arranged in a geometric pattern.

The invention relates to a tire comprising at least one carcass ply, reinforcement disposed over the at least one carcass ply in a crown area of the tire, tread disposed over the reinforcement, and sidewalls disposed over the at least one carcass ply radially inward of the tread, at least one component of the tire having injected ingredients wherein the injected ingredients are distributed in the component in a specific, controlled pattern.

The composite is a tire tread, and the injected ingredients may be distributed in different zones of the tread in specific densities and specific angles of orientation. For example, the injected ingredients may be fibers having a fiber density greater in a shoulder zone of the tread than in a central zone of the tread.

The angle of orientation of the fiber may vary with the curvature of the tread such that all fibers are at the same angle relative to the surface of the tread. Or, the fibers may all be parallel to one another regardless of the curvature of the tread. Alternatively, the angle of orientation of the fiber may vary with the curvature of the tread to provide maximum fiber reinforcement for the zone of the tread where the fiber is located.

In an illustrated embodiment, the fibers are located in two shoulder zones and two center zones, wherein the fiber density in each shoulder zone is at least eight times the density of each center zone.

### Brief Description of the Drawings

Fig. 1 illustrates a tire which can be made using the composites of the invention.
Fig. 2 illustrates an apparatus that can be used to inject fibers into a tire tread.
Fig. 3 illustrates a top view of a pattern of fiber reinforcement in a tire tread.
Fig. 4 illustrates a cross section of a tire tread with an alternative pattern of fiber reinforcement.
Fig. 5 illustrates a composite comprising a second alternative pattern of fiber reinforcement.

### Detailed Description of the Invention

In the conception of the present invention, based on the belief of the inventors that precise orientation of reinforcement fibers, in a fiber reinforced product, would significantly improve such reinforcement, the inventors proposed to precisely inject fibers into a tire. By injecting fibers into a tire, it is believed that the orientation (angle) of the fiber and concentration of the fiber can be controlled and optimized for most beneficial and efficient use of the fiber reinforcement. For example, the fiber reinforcement may be placed in a high density where most reinforcement is needed, and the fiber reinforcement may be precisely oriented (angled) to maximize the reinforcement.

It will be apparent to those skilled in the art that the apparatus used in the invention can be used to inject a broad range of materials, e.g. reinforcing polymer blends, high tack adhesives, fillers, etc. into a polymeric substrate, e.g. plastics or elastomers. For ease of illustration, the invention will be described as it relates to the injection of fiber reinforcement into a tire or tire component. Those skilled in the art will recognize that tires can be made with other types of injected materials. In the illustrated embodiment, monofilament or yarn fibers can be used.

Discrete fiber injection involves the injection of individual fibers into an uncured elastomer matrix to achieve precision fiber orientation and distribution within an elastomeric composite. The fibers are introduced into the elastomer after the mixing and shaping stages of processing, so discrete fiber injection is not limited as to fiber size, fiber loading, or compound viscosity.

It is believed that the invention may be practiced with injectable fibers, or other injectable materials, at a density up to about 10¹⁰ fibers per square inch (which equals 6,45 square centimeters).

It is desirable to inject the reinforcing material into an uncured elastomer, especially a rubber. As the elastomer reaches curing temperature it flows, and the curing process enhances the mechanical trapping of reinforcement into the elastomer, and the curing process itself raises the possibility of cross-linking between the reinforcement and the elastomer.

To fully understand the mechanisms of fiber reinforcement, it is necessary to know the structure of the fibers and how they are made, particularly in terms of orientation of the polymer chains in the fiber.

Conventional fibers such as polyamides, polyesters and polyolefins have a flexible molecular chain structure and tend to crystallize into folded-chain crystalline domains. Fully oriented, or strictly speaking highly oriented, extended-chain crystalline fibers can be prepared by spinning liquid crystalline melts or solutions of stiff-chain polymers, known respectively as thermotropic and lyotropic polymers. When spinning liquid crystalline (anisotropic) melts or solutions, only the spinning process is required and drawing is not necessary to obtain highly oriented fibers.

Highly oriented, extended-chain crystalline fibers are made from rigid-rod, aromatic heterocyclic polymers by a liquid crystalline solution-spinning route. The best known examples of this class of fibers are poly (p-phenylenebenzobisthiazole) or PBZT, and poly (p-phenylenebenzobisoxazole), known as PBZO.

Highly oriented aramid fibers can also be prepared by conventional spinning of an isotropic solution of an aromatic copolyamide, followed by drawing of the spun fibers at very high temperatures and draw ratios. A fiber of this type, copoly (p-phenylene/3,4-oxydiphenyleneterephthalamide), is made commercially by Teijin, Ltd., Japan, under the trade name Technora®, and can be converted to a pulp that can be used in the hybrid reinforcement composites.

Highly oriented, extended-chain crystalline fibers can also be produced from flexible chain polymers by a gel spinning technique. Examples of this type of fiber are polyvinylalcohol (PVA) fiber and some polyolefin fibers (e.g. polyethylene).

It is noted that all these fibers, whether stiff or flexible chain, whether made by a liquid crystalline or a conventional solvent spinning process or via gel spinning, have one common characteristic, viz., a high degree of orientation. An ultra-high degree of orientation, and concomitant mechanical anisotropy, is the main microstructural feature responsible for the tendency of these fibers to undergo, to a greater or lesser extent, axial splitting and fibrillation under shear, yielding pulp-like products.

In one embodiment of the invention, an elastomer composition employing POY (partially oriented yarn) short fibers can be used as a component in a pneumatic tire. In the illustrated embodiment, such reinforcement is used in the tread of a tire.

Examples of specific fibers that can be partially oriented are nylon 6, nylon 46, nylon 66, polypropylene, polyethylene, polyethyleneterephthalate (PET) and polyethylenenaphthalate (PEN).

In the tire illustrated in the present invention, where fibers are oriented in the tread of a tire for abrasion resistance and traction, it is believed that the highly oriented, stiff fibers will work best. Concept testing will employ steel fibers. Those skilled in the art will recognize that injected POY fibers and plastic reinforcement domains, as well as injectable filler materials and other reinforcement materials, may be suitable for other applications.

Eastomers that can be used in a tire of the invention include, but are not limited to natural rubber, butadiene rubbers, polyisoprene rubber (IR), styrene butadiene rubber (SBR), butyl and halobutyl rubbers (IIR, BIIR, CIIR), ethylene propylene rubbers (EPM, EPDM), crosslinked polyethylene (XLPE) and chloroprene rubbers (CR), nitrile rubbers (NBR), and mixtures thereof.

In an illustrated embodiment, the majority of fibers in the tread are oriented at a substantially 90° angle with respect to the surface of the tread of the tire.

Any angle of orientation of the short fibers can be used.

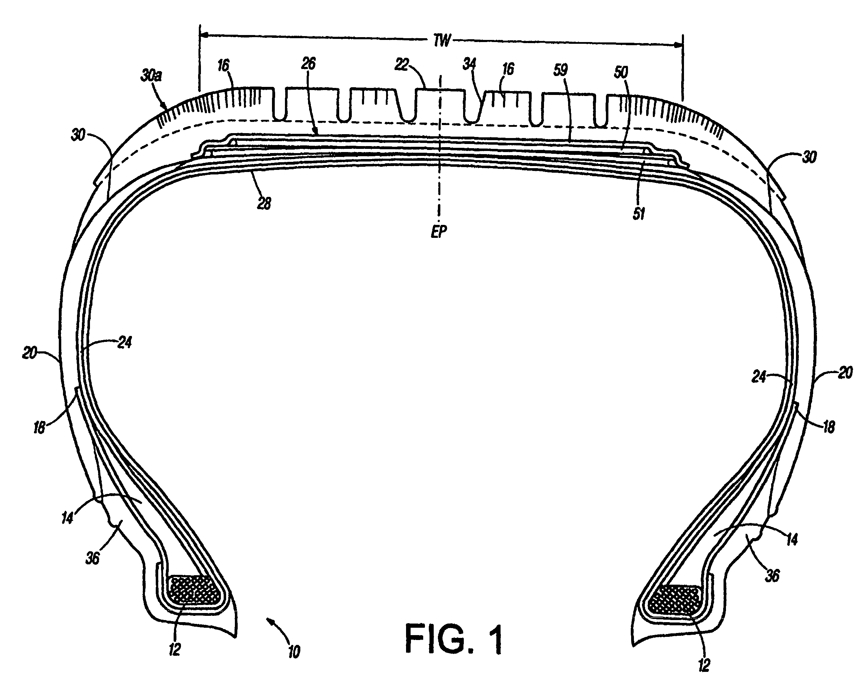

With reference now to Fig 1, a tire 10 is illustrated which has been made with a fiber reinforced tread 22 of the invention. The crown area of the tire may be further reinforced by a belt package 26 which comprises belts or breakers 50, and an optional overlay ply 59.

As is conventional in the art, the tire comprises a pair of beads 12 over which have been wrapped carcass plies 24. The turning up of carcass plies 24 over beads 12 forms apex 14 between carcass 24 and turn up 18. When a tubeless tire is made, the tire will have an inner liner 28 disposed inwardly of carcass ply 24. Tire 10 may also have optional chafer 36. The width of the tread (TW) is defined substantially as the part of the tire tread that is in contact with the ground when the tire is on the ground and is stationary. Those skilled in the art will recognize that during cornering, the shoulder portion 30a of the tread may contact the road surface as well.

Sidewalls 20 meet tread 12 at shoulder 30 to substantially complete the tire's construction. In the illustrated embodiment of Fig. 1, fiber reinforcement 16 has been injected into shoulder area 30a at one fiber density, and into central lugs 34 at a different fiber density.

The high density of fibers 16 in the shoulder region 30a of the tread provides increased abrasion resistance where it is most needed in the tread, and may increase the tire's ability to hold the road when the tire corners, because of the potential biting effect of each individual fiber end.

The use of fewer fibers 16 in lugs 34 means that the rubber in lugs 34 will have a modulus (hardness) less than that observed in the rubber seen in the shoulder area 30a of the tread, which suggests that lugs 34 will show increased traction properties, relative to highly fiber-loaded shoulder areas 30a. The fiber ends contacting the road surface may also improve the lateral stability of the tire.

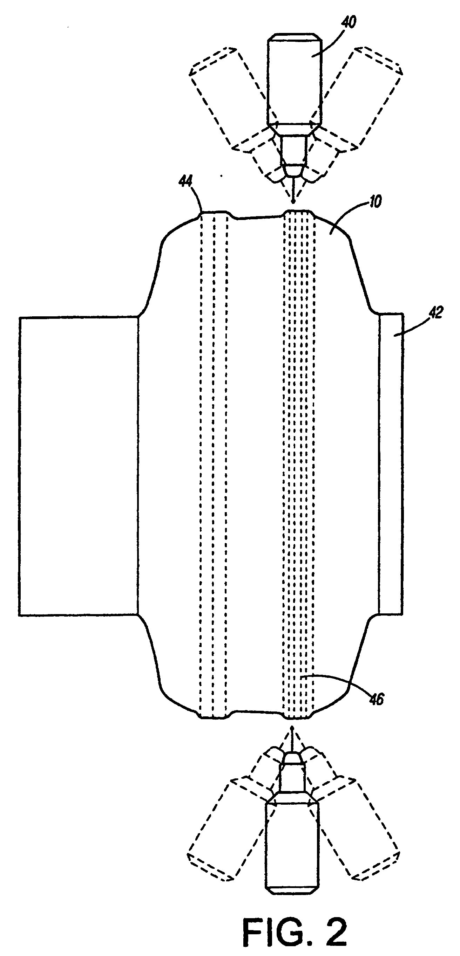

The fibers may be injected into an uncured tire 10 by hand, which method is very labor intensive, or by using an automated apparatus as shown in Fig. 2. Such an automated apparatus is described in U.S. application S.N. 09/732 056, filed on December 7, 2000.

In the automated apparatus shown in Fig. 2, a needle assembly 40 can be used to inject a fiber into a tire tread while the completed, uncured tire 10 rotates on a drum 42. The fiber may be injected at any desired angle, and may be injected at a fiber density that is appropriate for its intended purpose. In Fig. 2, a tire is illustrated with three rows of fibers injected in one shoulder 44, and six rows of fibers in opposite shoulder 46.

The fibers may also be injected into product components separately, for example, into a tread, belt, apex or sidewall as they exit an extruder, wherein the fiber loaded component can be built into a tire, or other product where appropriate.

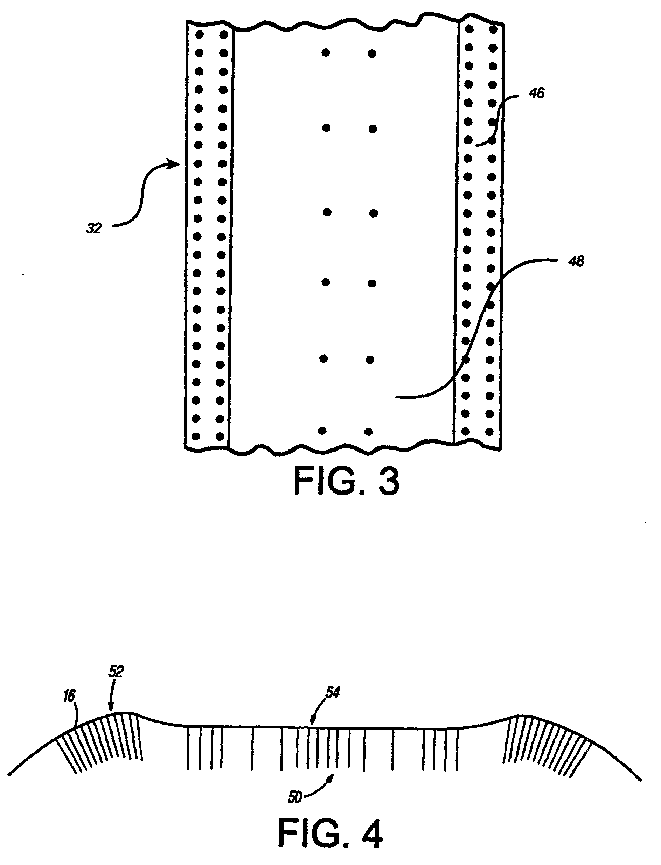

Fig. 3 may be representative of a belt (conveyor belt, tire belt, or transmission belt, for example) or a tire tread or sidewall, or other elastomeric component 32. In the illustrated embodiment, the component 32 is injected with a higher concentration of injected material 38 (fibers, fillers, adhesives, high tack rubbers) at the edge 46 than in the center portion 48. Those skilled in the art will recognize the concentration of injectable material may vary as desired for a specific application.

In a tire, the choice of the angle of the injection is determined based on the kind of forces encountered by, and the kind of surface the tire 10 is expected to encounter when being used. For example, with reference to Fig. 4, if the shoulder 52 of a tire tread 50 needs abrasion resistance, fibers 16 may be injected at an angle that will be normal (perpendicular) to the surface of the tread when the tire is cornering. To further illustrate, if traction on a smooth surface is desired, a high tack rubber may be injected into a central portion 54 of the tread 50 at an angle which maximizes contact between the high tack rubber in a rotating tread surface and a road surface.

Alternatively, using the tire tread of Fig. 4 as an example, a higher density of fibers 16 may be incorporated in shoulder 52 of tread 50 where more reinforcement and traction is needed due to stresses on the shoulder of the tire during cornering. Lower densities of fiber 16 may be used in the center portion 54 of the tire where stresses and abrasion are less.

For most applications, it is believed that orientation of the fibers perpendicular to the surface of the tread is most beneficial, although it may be speculated, for increased traction, that fibers may be oriented in the center of the tread at an acute angle that is chosen so that the fibers bite into the pavement during acceleration of the tire.

Those skilled in the art will be able to determine suitable concentrations and orientations of injected reinforcement in other elastomeric components of a tire, such as apexes, sidewalls, toe guards etc., and in other products, such as conveyer belts, based on the stresses and forces that act on the component or product, using the principles described herein.

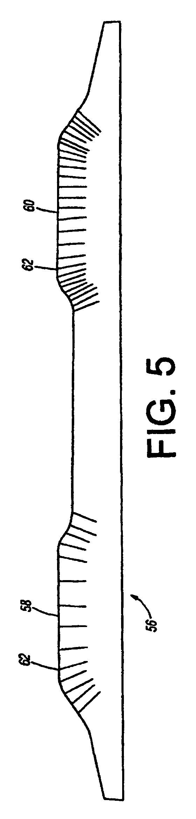

With reference now to Fig. 5, in a further embodiment of the invention, the application of an injectable material 62 may be asymmetrical, or a calculated random pattern can be used. For example, a tire tread 56 may have a higher concentration of injectable material in a first shoulder area 60 of the tread 56 than in a second shoulder area 58.

Such a structure may be applicable to racing tires, for example, that are used on a circular or oval track, where the outside tire on the vehicle is subjected to higher cornering forces than the inside tire. In such an embodiment, the first shoulder area 60, with a high level of reinforcement, and an increased modulus, would represent the outside shoulder of the tire as mounted on a car.

## Claims

1. A tire comprising at least one carcass ply (24), reinforcement (26) disposed over said at least one carcass ply in a crown area of said tire (10), a tread (22) disposed over said reinforcement (26), the tread (22) having shoulder zones (30a) and a central zone (34), and sidewalls (20) disposed over said at least one carcass ply radially inward of said tread, at least one component of said tire (10) having injected fibers (16), the tire (10) being **characterized by** the at least one component being the tread, wherein all of the injected fibers are precisely placed and distributed in a specific controlled pattern in the component and extend in the radial direction of the tire.

2. The tire of claim 1, wherein said injected fibers (16) are disposed in a plurality of groups, wherein all the fibers (16) in each group have a controlled angle of orientation in said component.

3. The tire of claim 1, wherein said injected fibers are distributed in different zones of said tread in specific densities and specific angles of orientation.

4. The tire of claim 3, wherein the fiber density of the injected fibers (16) is greater in a shoulder zone (30a) of said tread (22) than in a central zone (34) of said tread.

5. The tire of claim 4, wherein the angle of orientation of said injected fibers (16) varies with the curvature of said tread (22) such that all fibers are at the same angle relative to the surface of said tread.

6. The tire of claim 4, wherein the fibers (16) are all parallel to one another regardless of the curvature of said tread.

7. The tire of claim 4, wherein the angle of orientation of said fibers(16) varies with the curvature of said tread (22) to provide maximum fiber reinforcement for the zone of the tread where the fibers are located.

8. The tire of claim 7, wherein the fibers (16) are aligned substantially perpendicular to the surface of the tread.

9. The tire of claim 1, wherein the fiber density in each shoulder zone is at least eight times the density of each center zone.

## Patentansprüche

1. Ein Reifen, der zumindest eine Karkassenlage (24), eine in einem Zenitbereich besagten Reifens (10) über besagter zumindest einer Karkassenlage (24) angeordnete Verstärkung (26), eine über besagter Verstärkung (26) angeordnete Lauffläche (22), wobei die Lauffläche (22) Schulterzonen (30a) und eine zentrale Zone (34) aufweist, und über besagter zumindest einer Karkassenlage radial nach innen von besagter Lauffläche angeordnete Seitenwände (20) umfasst, wobei zumindest eine Komponente besagten Reifens (10) injizierte Fasern (16) aufweist, wobei der Reifen (10) **dadurch gekennzeichnet ist, dass** die zumindest eine Komponente die Lauffläche ist, wobei alle injizierten Fasern präzise platziert und in einem spezifischen gesteuerten Muster in der Komponente verteilt sind und sich in der radialen Richtung des Reifens erstrecken.

2. Der Reifen gemäß Anspruch 1, wobei besagte injizierte Fasern (16) in einer Vielzahl von Gruppen angeordnet sind, wobei alle Fasern (16) in jeder Gruppe einen gesteuerten Orientierungswinkel in besagter Komponente aufweisen.

3. . Der Reifen gemäß Anspruch 1, wobei besagte injizierte Fasern in verschiedenen Zonen besagter Lauffläche in spezifischen Dichten und spezifischen Orientierungswinkeln verteilt sind.

4. Der Reifen gemäß Anspruch 1, wobei die Faserdichte der injizierten Fasern (16) in einer Schulterzone (30a) besagter Lauffläche (22) größer ist als in einer zentralen Zone (34) besagter Lauffläche.

5. Der Reifen gemäß Anspruch 4, wobei der Orientierungswinkel besagter injizierter Fasern (16) mit der Krümmung besagter Lauffläche (22) variiert, sodass alle Fasern sich in Bezug zur Oberfläche besagter Lauffläche im gleichen Winkel befinden.

6. Der Reifen gemäß Anspruch 4, wobei die Fasern (16) alle parallel zueinander sind, ungeachtet der Krümmung besagter Lauffläche.

7. Der Reifen gemäß Anspruch 4, wobei der Orientierungswinkel besagter Fasern (16) mit der Krümmung besagter Lauffläche (22) variiert, um für diejenige Zone der Lauffläche, wo die Fasern sich befinden, eine maximale Faserverstärkung zu verschaffen.

8. Der Reifen gemäß Anspruch 7, wobei die Fasern (16) im Wesentlichen senkrecht zur Oberfläche der Lauffläche ausgerichtet sind.

9. Der Reifen gemäß Anspruch 1, wobei die Faserdichte in jeder Schulterzone zumindest acht Mal die Dichte jeder zentralen Zone beträgt.

## Revendications

1. Bandage pneumatique comprenant au moins une nappe de carcasse (24), un renforcement (26) disposé par-dessus ladite au moins une nappe de carcasse dans la zone de couronne dudit bandage pneumatique (10), une bande de roulement (22) disposée par-dessus ledit renforcement (26), ladite bande de roulement (22) possédant des zones d'épaulement (30a) et une zone centrale (34), et des flancs (20) disposés par-dessus ladite au moins une nappe de carcasse à l'intérieur de ladite bande de roulement en direction radiale, au moins un composant dudit bandage pneumatique (10) comportant des fibres injectées (16), le bandage pneumatique (10) étant **caractérisé par le fait que** ledit au moins un composant représente la bande de roulement, la totalité des fibres injectées étant placées de manière précise et étant distribuées pour obtenir une configuration spécifique contrôlée dans le composant, et s'étendant dans la direction radiale du bandage pneumatique.

2. Bandage pneumatique selon la revendication 1, dans lequel lesdites fibres injectées (16) sont disposées en plusieurs groupes, la totalité des fibres (16) dans chaque groupe possédant un angle d'orientation contrôlé dans ledit composant.

3. Bandage pneumatique selon la revendication 1, dans lequel lesdites fibres injectées sont distribuées dans différentes zones de ladite bande de roulement avec des densités spécifiques et des angles d'orientation spécifiques.

4. Bandage pneumatique selon la revendication 3, dans lequel la densité des fibres injectées (16) dans la zone d'épaulement (30a) de ladite bande de roulement (22) est supérieure à la densité des fibres dans la zone centrale (34) de ladite bande de roulement.

5. Bandage pneumatique selon la revendication 4, dans lequel l'angle d'orientation formé par lesdites fibres injectées (16) varie avec la courbure de ladite bande de roulement (22), de telle sorte que la totalité des fibres forment le même angle par rapport à la surface de ladite bande de roulement.

6. Bandage pneumatique selon la revendication 4, dans lequel les fibres (16) sont toutes parallèles les unes aux autres, indépendamment de la courbure de ladite bande de roulement.

7. Bandage pneumatique selon la revendication 4, dans lequel l'angle d'orientation formé par lesdites fibres (16) varie en fonction de la courbure de ladite bande de roulement (22) afin de procurer un renforcement de fibres maximal pour la zone de la bande de roulement dans laquelle sont disposées les fibres.

8. Bandage pneumatique selon la revendication 7, dans lequel les fibres (16) sont mises en alignement essentiellement perpendiculaire par rapport à la surface de la bande de roulement.

9. Bandage pneumatique selon la revendication 1, dans lequel la densité des fibres dans chaque zone d'épaulement représente au moins huit fois la densité des fibres dans chaque zone centrale.
